# EUROPEAN PATENT APPLICATION

(11) **EP 4 748 527 A2**
(43) Date of publication of application: **27.05.2026**
(21) Application number: 25216831.5
(22) Date of filing: 19.11.2025
(51) Int. Cl.: B23K 11/25, B23K 31/12

(54) **SYSTEM AND METHOD FOR MONITORING RESISTANCE WELDING**

(30) Priority: 20.11.2024 KR 20240166572
(71) Applicant: SAMSUNG SDI CO., LTD., Yongin-si, Gyeonggi-do 17084 (KR)
(72) Inventor: Park, Sangki, Yongin-si, Gyeonggi-do 17084 (KR); Kim, Minsu, Yongin-si, Gyeonggi-do 17084 (KR); Byun, Kyeongrok, Yongin-si, Gyeonggi-do 17084 (KR); Shin, Seonhye, Yongin-si, Gyeonggi-do 17084 (KR); Ryu, Sang Hyun, Yongin-si, Gyeonggi-do 17084 (KR)
(74) Representative: Meissner Bolte Partnerschaft mbB

(57) **Abstract**

Disclosed are a system and method for monitoring resistance welding and a system and method for monitoring resistance welding based on data acquisition (DAQ). The method of monitoring resistance welding includes steps of a) converting a signal obtained in a resistance welding process, b) measuring waveform data of a welder, c) performing analysis setting and automatic waveform data analysis, d) extracting a feature value for each waveform based on the results of the analysis of the waveform data, e) setting specifications by performing data communication with the welder, and f) performing the reinforcement of the specifications based on the waveform data analysis.

## Description

### CROSS-REFERENCE TO RELATED APPLICATIONS

The present invention relates to a system and method for monitoring resistance welding, and more particularly, to a system and method for monitoring resistance welding based on data acquisition (DAQ).

A resistance welding process is a process of welding the negative tab and can of a circular cell of a secondary battery. A system for monitoring resistance welding monitors the quality of resistance welding by analyzing a signal that is generated when a resistance welding process is performed.

### SUMMARY

The present invention is directed to providing a system and method for monitoring resistance welding, which provide an independent analysis area for a heterogeneous analog signal without being limited to the reception speed of a digital signal, can easily guarantee compatibility between hardware and software, and can secure the reliability of monitoring results, by using data acquisition (DAQ).

A method of monitoring resistance welding according to invention includes steps of a) converting a signal obtained in a resistance welding process, b) measuring waveform data of a welder, c) performing analysis setting and automatic waveform data analysis, d) extracting a feature value for each waveform based on the results of the analysis of the waveform data, e) setting specifications by performing data communication with the welder, and f) performing the reinforcement of the specifications based on the waveform data analysis.

The step a) preferably includes removing sensor noise in a process of converting into a digital signal an obtained analog signal.

The step b) preferably includes measuring the waveform data of the welder based on a preset sampling rate.

The step c) preferably includes performing the analysis setting including an analysis area and an analysis time.

The step d) preferably includes extracting the feature value for each waveform including at least any one of a maximum, a minimum, an average value, a standard deviation, and a waveform trend as the consecutive results of the waveform data analysis.

The step e) preferably includes setting the specifications related to the reinforcement of a monitoring system by performing bidirectional communication with the welder with which bidirectional communication with a facility control system is performed.

The step f) preferably includes designing an additional function module that is matched with user needs based on the results of the reinforcement of the specifications based on the waveform data analysis.

A system for monitoring resistance welding according to invention includes an input interface device configured to receive welding condition setting information and a measured value, memory in which a program that performs monitoring of resistance welding has been stored, and a processor configured to execute the program. According to the invention, the processor receives a measured value which includes the results of the execution of test welding based on the welding condition setting information and performing analysis setting.

The input interface device preferably receives a digital signal at a rate exceeding a predetermined number per second. The processor preferably represents a digital signal numerically and visually by converting the digital signal into quantitative data.

The processor preferably performs the analysis of waveform characteristics by omitting correction of conversion data and a synchronization process for the analysis of an analog signal.

The processor preferably measures the waveform data of a welder based on a preset sampling rate and performs the analysis of the waveform data.

The processor preferably performs analysis setting on the waveform characteristics including an analysis area and an analysis time.

The processor preferably extracts the waveform characteristics including at least any one of a maximum, a minimum, an average value, a standard deviation, and a waveform trend.

According to the present invention, correction and re-processing processes are not necessary when a digital signal is converted and independent analysis areas for two or more analog signals can be constructed because an analog signal is reconstructed without being limited to the reception speed of a digital signal.

According to the present invention, a virtual circuit that is mounted on the monitoring system can be implemented through only program and software work when the monitoring system needs to be improved or may be simply implemented by adding a module having an additional function that is compatible with hardware. Accordingly, it is possible to solve a problem in that entire remodeling is essentially required in order to guarantee compatibility between hardware and software according to the conventional technology.

According to the present invention, limitations are not imposed on an additional function implementation in terms of technology advancement because it is possible to secure the reliability of the monitoring system itself.

However, effects that can be achieved through the present invention are not limited to the herein-described effects, and other technical effects not mentioned will be clearly understood by those skilled in the art from the description of the disclosure described herein.

### BRIEF DESCRIPTION OF THE DRAWINGS

The following drawings illustrate example embodiments of the present disclosure, and further describe example aspects of the present disclosure together with the detailed description of the present disclosure. Thus, the present disclosure should not be construed as being limited to the drawings:
FIG. 1 schematically illustrates an electrode assembly of a secondary battery;
FIG. 2 schematically illustrates a configuration of a pouch-type secondary battery;
FIG. 3 illustrates a schematic external appearance configuration of a prismatic secondary battery;
FIG. 4 is a cross-sectional view of a cylindrical secondary battery;
FIGS. 5 and 6 illustrate problems with a system for monitoring resistance welding according to conventional technology.
FIG. 7 illustrates a process of a method of monitoring resistance welding according to embodiments of the present disclosure.
FIGS. 8 to 10 illustrate improvements according to embodiments of the present disclosure.
FIGS. 11 and 12 illustrate examples in which the system for monitoring resistance welding according to embodiments of the present disclosure has been applied.
FIG. 13 illustrates a specification process of the system for monitoring resistance welding according to embodiments of the present disclosure.
FIG. 14 is a block diagram illustrating a computer system for implementing a method according to embodiments of the present disclosure;
FIG. 15 is an example view of a secondary battery module in which secondary batteries manufactured according to examples of the present disclosure are arranged;
FIG. 16 is an example view of a secondary battery pack including the secondary battery module illustrated in FIG. 15; and
FIG. 17 is a conceptual view of a vehicle including the secondary battery pack illustrated in FIG. 16.

### DETAILED DESCRIPTION

Hereinafter, example embodiments of the present disclosure will be described, in detail, with reference to the accompanying drawings. The terms or words used in the present specification and claims are not to be limitedly interpreted based on their general or ordinary meaning, and should be interpreted as meanings and concepts that are consistent with the technical idea of the present disclosure on the basis of the principle that an inventor can be their own lexicographer to appropriately define concepts of terms to describe their disclosure in the best way.

The example embodiments described in this specification and the configurations shown in the drawings are only some example embodiments of the present disclosure and do not represent all of the aspects of the present disclosure. Accordingly, it should be understood that there may be various equivalents and modifications that can replace or modify one or more example embodiments described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges is within the scope of this disclosure.

References to two compared elements, features, etc. As being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

The terminology used herein is for the purpose of describing example embodiments of the present disclosure and is not intended to limit the present disclosure.

According to a conventional technology, a monitoring system has a limited reception speed of a signal because the monitoring system consists of customized in-house board-based hardware, and thus has a problem in that it is difficult to guarantee the consistency of measured values. The monitoring system has problems in that data correction is required in order to guarantee the consistency of measured values, a data analysis area needs to be synchronized, and overall remodeling must be required in order to guarantee compatibility between hardware and software when the monitoring system is improved.

According to a conventional technology, appropriateness is determined by applying a criterion for determination based on the statistical base of result values, based on a measured value obtained by converting a measured analog signal into a digital signal. There is a problem in that it is difficult for the accuracy of the criterion for determination to be guaranteed because the consistency of measured values cannot be guaranteed as described herein.

Accordingly, in the system for monitoring resistance welding according to the conventional technology, it is difficult for the accuracy of the criterion for determination to be reliable, and an additional function implementation that is required in terms of technology advancement for the monitoring system is also limited.

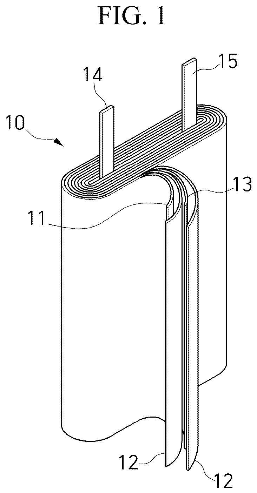

FIG. 1 schematically illustrates an electrode assembly built in a case of a secondary battery.

An electrode assembly 10 may be formed by winding or stacking a stack of a first electrode plate 11, a separator 12, and a second electrode plate 13, which are formed as thin plates or films. When the electrode assembly 10 is a wound stack, a winding axis may be parallel to the longitudinal direction (e.g., the y direction) of the case 59. In other example embodiments, the electrode assembly 10 may be a stack type rather than a winding type, and the shape of the electrode assembly 10 is not limited in the examples of the present disclosure. In addition, the electrode assembly 10 may be or include a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the examples of the present disclosure. The first electrode plate 11 of the electrode assembly may act as a negative electrode, and the second electrode plate 13 may act as a positive electrode. In examples, the reverse is also possible.

The first electrode plate 11 may be formed by applying a first electrode active material, such as graphite or carbon, to a first electrode current collector formed of a metal foil, such as copper, a copper alloy, nickel, or a nickel alloy. The first electrode tab 14 may be connected to an external first terminal (not shown). In some example embodiments, when the first electrode plate 11 is manufactured, the first electrode tab 14 may be formed by being cut in advance to protrude to one side of the electrode assembly 10, or the first electrode tab 14 may protrude to one side of the electrode assembly 10 more than, e.g., farther than or beyond, the separator 12 without being separately cut.

The second electrode plate 13 may be formed by applying a second electrode active material, such as a transition metal oxide, on a second electrode current collector formed of or including a metal foil, such as aluminum or an aluminum alloy. The second electrode plate 13 may include a second electrode tab 15 (e.g., a second uncoated portion) that is or includes a region to which the second electrode active material is not applied. The second electrode tab 15 may be connected to an external second terminal (not shown). In some example embodiments, the second electrode tab 15 may be formed by being cut in advance to protrude to the other side (e.g., the opposite side) of the electrode assembly 10 when the second electrode plate 13 is manufactured, or the second electrode plate 13 may protrude to the other side of the electrode assembly more than, e.g., farther than or beyond, the separator 12 without being separately cut.

In some example embodiments, the first electrode tab 14 may be located on the left side of the electrode assembly 10, and the second electrode tab 15 may be located on the right side of the electrode assembly 10. In other example embodiments, the first electrode tab 14 and the second electrode tab 15 may be located on one side of the electrode assembly 10 in the same direction.

Here, for convenience of description, the left and right sides are defined according to the electrode assembly 10 as oriented in FIG. 1, and the positions thereof may change when the secondary battery is rotated left and right or up and down.

The separator 12 hinders or substantially prevents a short-circuit between the first electrode 11 and the second electrode 13 while allowing movement of lithium ions therebetween. The separator 12 may be made of or include, for example, a polyethylene film, a polypropylene film, a polyethylene-polypropylene film, etc.

In some example embodiments, the electrode assembly 10 may be accommodated in the case (not shown) along with an electrolyte. In the case of a pouch-type secondary battery, an electrode assembly 10 may be accommodated in a pouch made of or including flexible material in the form illustrated in FIG. 1. In the case of a prismatic secondary battery, an electrode assembly 10 may be accommodated in a prismatic metal casing in the form illustrated in FIG. 1.

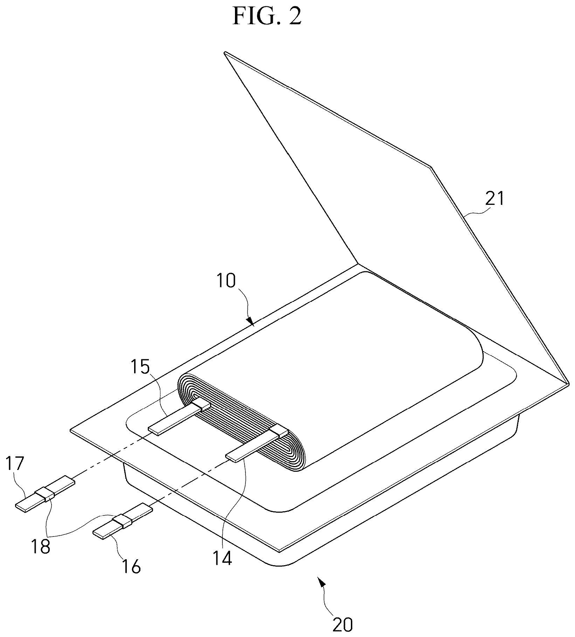

FIG. 2 schematically illustrates the pouch-type secondary battery.

The pouch-type secondary battery includes an electrode assembly 10 and a pouch 20 that accommodates or contains the electrode assembly 10 therein.

The electrode assembly 10 may be the same as the electrode assembly 10 illustrated in FIG. 1. The first electrode tab 14 and the second electrode tab 15 of the electrode assembly 10 may be electrically connected to respective external first and second terminal leads 16 and 17 by ,e.g., welding or other attaching method that preserves conductivity therebetween. At least a portion of each of the first terminal lead 16 and the second terminal lead 17 may be attached or covered with a tab film 18 for insulation from the pouch 20.

The pouch 20 may be sealed by having sealing parts 21 at the edges thereof come into contact with each other while accommodating or containing the electrode assembly 10 therein, in which case the sealing may be achieved with the tab film 18 interposed between the sealing parts 21. The sealing parts 21 of the pouch 20 may be made of or include a thermal fusion material that generally has weak adhesion to metal. Thus, it may be fused to the pouch 20 by interposing the thin tab film 18 between the sealing parts 21.

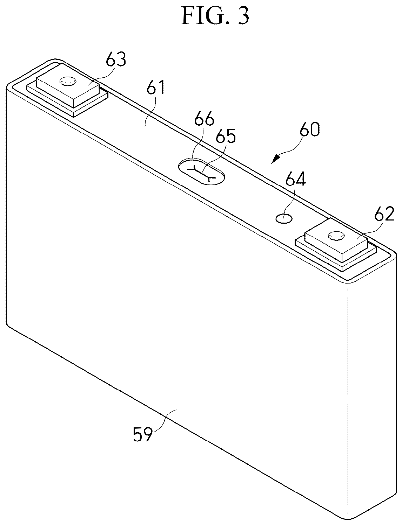

FIG. 3 illustrates a schematic external appearance configuration of a prismatic secondary battery.

A prismatic case 59 defines an overall appearance of the prismatic secondary battery, and may be made of or include a conductive metal, such as aluminum, aluminum alloy, or nickel-plated steel. In addition, the case 59 may provide a space for accommodating or containing the electrode assembly 10 therein.

A cap assembly 60 may include a cap plate 61 that covers an opening of the case 59, and the case 59 and the cap plate 61 may be made of or include a conductive material. A first terminal 63 and a second terminal 62 may be electrically connected to the first electrode tab 14 and the second electrode tab 15 of the electrode assembly 10 illustrated in FIGS. 1 and 2 inside the case 59, and may be installed to protrude outward through the cap plate 61.

The cap plate 61 may be equipped with or include an electrolyte injection port 64 configured to install a sealing plug therein, and a vent 66 formed that includes a notch 65 may be installed. The vent 66 is configured to discharge any gas generated inside the secondary battery.

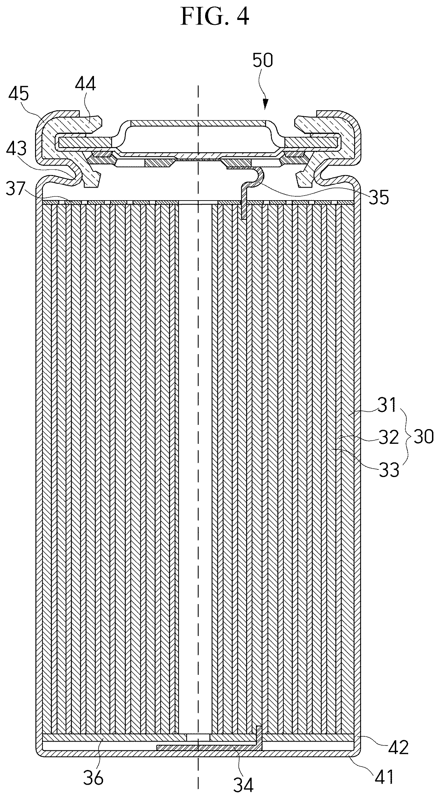

FIG. 4 is a cross-sectional view of a cylindrical secondary battery.

The cylindrical secondary battery includes an electrode assembly 30, a case accommodating the electrode assembly 30 and an electrolyte therein, a cap assembly 50 coupled to an opening of the case to seal the case, and an insulating plate 37 located between the electrode assembly 30 and the cap assembly 50 inside the case.

The electrode assembly 30 may include a separator 32 between a first electrode 33 and a second electrode 31, and the electrode assembly 30 may be wound in a jelly-roll form.

The first electrode 33 may include a first substrate and a first active material layer located on the first substrate. A first lead tab 35 may extend outward from a first uncoated portion of the first substrate where the first active material layer is not located, and may be electrically connected to the cap assembly 50.

The second electrode 31 may include a second substrate and a second active material layer located on the second substrate. A second lead tab 34 may extend outward from a second uncoated portion of the second substrate where the second active material layer is not located, and may be electrically connected to the case. The first lead tab 35 and the second lead tab 34 may extend in opposite directions with respect to each other.

The first electrode 33 may constitute a positive electrode. In this case, the first substrate may be composed of or include, for example, aluminum foil, and the first active material layer may include, for example, a transition metal oxide. The second electrode 31 may constitute a negative electrode. In this case, the second substrate may be composed of or include, for example, copper foil or nickel foil, and the second active material layer may include, for example, graphite.

The separator 32 may reduce or prevent a short-circuit between the first electrode 33 and the second electrode 31 while allowing movement of lithium ions therebetween. The separator 32 may be made of or include, for example, at least one of a polyethylene film, a polypropylene film, a polyethylene-polypropylene film, etc.

The case accommodates or contains the electrode assembly 30 and the electrolyte, and substantially forms the external appearance of the secondary battery together with the cap assembly 50. The case may have a substantially cylindrical body portion 42, and a bottom portion 41 connected to one side of the body portion 42. A beading part 43 deformed inwardly may be formed in the body portion 42, and a crimping part 45 bent inwardly may be formed at an open end of the body portion 42.

The beading part 43 may reduce or prevent movement of the electrode assembly 30 inside the case, and may facilitate seating of a gasket 44 and the cap assembly 50. A crimping part 45 may firmly fix the cap assembly 50 by pressing the edge of the cap assembly 50 against the gasket 44. The case may be formed of or include iron plated with nickel, for example.

The cap assembly 50 may be fixed to the inside of the crimping part 45 through the gasket 44 to seal the case. The cap assembly 50 may include a cap up, a safety vent, a cap down, an insulating member, and a subplate, but is not limited to this example and may be variously modified.

The cap up may be located at the very top of the cap assembly 50. The cap up may include a terminal portion that protrudes convexly upward and is connected to an external circuit, and an outlet for discharging gas may be located around the terminal portion.

The safety vent may be located below the cap up. The safety vent may include a protrusion that protrudes convexly downward and is connected to the subplate, and at least one notch located around the protrusion.

When gas is generated due to overcharging or abnormal operation of the secondary battery, the protrusion may be deformed upward by pressure and may separate from the subplate, while the safety vent may be cut along the notch. The cut safety vent may hinder or prevent the secondary battery from exploding by discharging gas to the outside.

The cap down may be located below the safety vent. The cap down may be formed with a first opening for exposing the protrusion of the safety vent and a second opening for discharging gas. The insulating member may be located between the safety vent and the cap down to insulate the safety vent and the cap down.

The subplate may be located below the cap down. The subplate may be fixed to a lower surface of the cap down to block the first opening of the cap down, and the protrusion of the safety vent may be fixed to the subplate. The first lead tab 35 pulled out from the electrode assembly 30 may be fixed to the subplate. Accordingly, the cap up, the safety vent, the cap down, and the subplate may be electrically connected to the first electrode 33 of the electrode assembly 30.

The insulating plate 37 may be located below the beading portion 43 to be in contact with the electrode assembly 30, and may be provided with a tab opening for pulling out the first lead tab 35. The cap assembly 50, which is electrically connected to the first electrode 33 by the first lead tab 35, may face the electrode assembly 30 with the insulating plate 37 interposed therebetween, and may maintain an insulated state from the electrode assembly 30 by the insulating plate 37. On the other hand, another insulating plate 36 may be included for insulation between the electrode assembly 30 and the bottom portion 41 of the case.

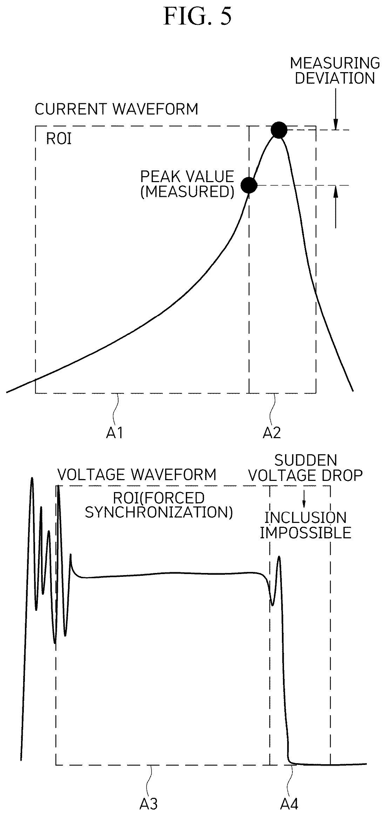

Hereinafter, a background proposed by the present disclosure is described in order to help understanding of those skilled in the art and a system and method for monitoring resistance welding according to embodiments of the present disclosure are described with reference to FIGS. 5 to 12.

A system for monitoring resistance welding according to a conventional technology has limitations in terms of the reception speed of a signal because the system includes a monitoring system with customized in-house board-based hardware, and has problems in that it is difficult to guarantee the consistency of measured values and to improve an additional function. The conventional technology has problems in that it is necessary to correct measured result values because a welding process is monitored based on limited measured signal data and absurdities, such as a loss of a part of a measurement area, are present.

The conventional technology has problems in that it is difficult to reconstruct an actual analog signal because the reception speed of a digital signal is partially limited as described herein, conversion value correction and re-processing processes are required in a process of converting an actual analog signal into a digital signal, and it is difficult to guarantee matching in terms of the analysis and measurement of quantitative data because all of areas for the analysis of two or more analog signals are synchronized.

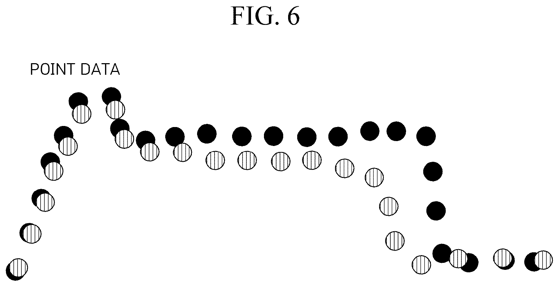

FIGS. 5 and 6 illustrate problems with a system for monitoring resistance welding according to a conventional technology.

The system for monitoring resistance welding according to the conventional technology requires PCB rotation and electronic redesign processes and a machine language-based software redesign when needs for functional improvements are required, and is required to verify a design change point and mass productivity. According to the conventional technology, it is difficult to satisfy functional needs for the deletion of a corrected value, the deletion of ROI, the analysis of waveform data, and communication with a welder because it is difficult to modify hardware and software of the existing instrument.

Referring to FIG. 5, it is assumed that the magnification of a welding current is 0.96 to 1.05, an offset is 100 ampere, the magnification of a transformer voltage is 0.87, and the magnification of a welding voltage is 0.98. The conventional technology has problems in that a measured peak value versus a measurement deviation occurs, consistency is insufficient due to forced synchronization between a corrected value and ROI, and only a representative value is obtained.

Referring to FIG. 6, conventional technology has a problem in that waveform analysis is impossible because data as point data are obtained as discrete data.

Furthermore, according to conventional technology, connectivity is secured between facility control systems, such as a welder and PLC, and connectivity between a monitoring system and the facility control system is secured. In contrast, there is a problem in that communication with a welder is impossible.

Embodiments of the present disclosure propose a system and method for monitoring resistance welding based on data acquisition (DAQ), which receive electrical signals of a sensor and a computer.

According to embodiments of the present disclosure, a hardware structure including a module that receives an analog signal that is generated during welding as a digital signal and a computer on which a virtual circuit that reconstructs the received digital signal is mounted is applied. The digital signal is designed to have a reception speed having preset specifications (e.g., 5000 or more per second). The received digital signal is converted into quantitative data so that the digital signal is represented through hardware numerically/visually.

The converted data is measured and monitored after being re-processed as numerical/visual data depending on their use based on an algorithm installed in the virtual circuit and the computer hardware. Monitoring is performed on resistance welding.

According to embodiments of the present disclosure, correction and re-processing processes are not necessary when a digital signal is converted because an analog signal is reconstructed without being limited to the reception speed of a digital signal. Independent analysis areas for two or more analog signals can be constructed. A virtual circuit mounted on a monitoring system may be implemented through only program and software work when the monitoring system needs to be improved, or may be simply implemented by adding a module having an additional function compatible with hardware. It is possible to solve the problem in that entire remodeling is necessary in order to guarantee compatibility between hardware and software according to the conventional technology. According to embodiments of the present disclosure, it is possible to secure the reliability of the monitoring system itself, and limitations are not imposed on an additional function implementation in terms of technology advancement.

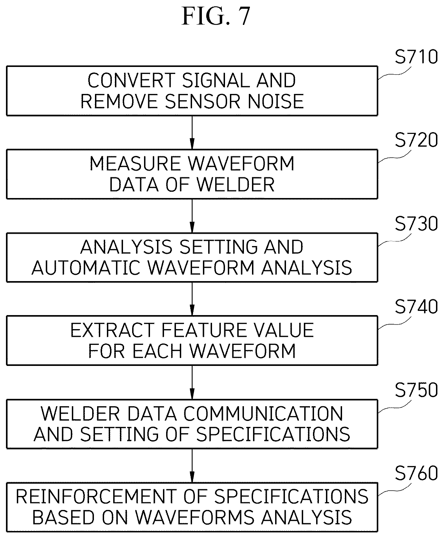

FIG. 7 illustrates a process of a method of monitoring resistance welding according to embodiments of the present disclosure.

According to conventional technology, sensor noise is included, data communication with a welder is impossible, reverse matching for a corrected value and ROI is differently applied for each welder, an original point is damaged, the reinforcement of specifications is impossible, and an issue related to resistance welding continues to occur.

In contrast, according to embodiments of the present disclosure, it is possible to guarantee the consistency of measured data and to improve the reliability of monitoring because waveform data are constructed through high speed sampling by using data that are obtained by converting data measured during a resistance welding process for the negative tab of a circular cell of a secondary battery, that is, analog data, into a digital signal.

**A** method of monitoring resistance welding according to embodiments of the present disclosure may include step S710 of converting a signal and removing sensor noise, step S720 of measuring the waveform data of a welder, step S730 of performing analysis setting and automatic waveform analysis, step S740 of extracting a feature value for each waveform, step S750 of performing welder data communication and setting specifications, and step S760 of performing the reinforcement of the specifications based on waveforms.

**In** step S710, a welding process and monitoring may be started. Sensor noise may be removed in a process of converting an obtained analog signal into a digital signal.

In step S720, hardware and software optimization may be performed through high speed sampling. A sampling rate may be a preset frequency (e.g., 50 kHz), and the waveform data of a welder may be measured.

In step S730, analysis setting including an analysis area and an analysis time may be performed.

**In** step S740, a feature value for each waveform may be extracted with respect to at least any one of a maximum, a minimum, an average value, a standard deviation, and a waveform trend by using the consecutive automatic analysis results of the waveforms.

In step S750, welder data communication and specifications may be set, and the reinforcement of a monitoring system may be performed.

In step S760, an additional function module that is matched with user needs may be designed based on the results of the reinforcement of the specifications based on the waveform analysis through bidirectional communication.

According to embodiments of the present disclosure, when functional improvement needs occur, a specific function module (or additional function module) may be added, and a graphic-based software sector may be added. Accordingly, there is an effect in that an issue in terms of a redesign according to a conventional technology does not occur because a design change point does not occur.

According to embodiments of the present disclosure, it is possible to satisfy technical needs for standard measuring, modular measuring, flexible response software, and an additional function (add-on) by introducing hardware based on DAQ and software using a graphic-based programming tool.

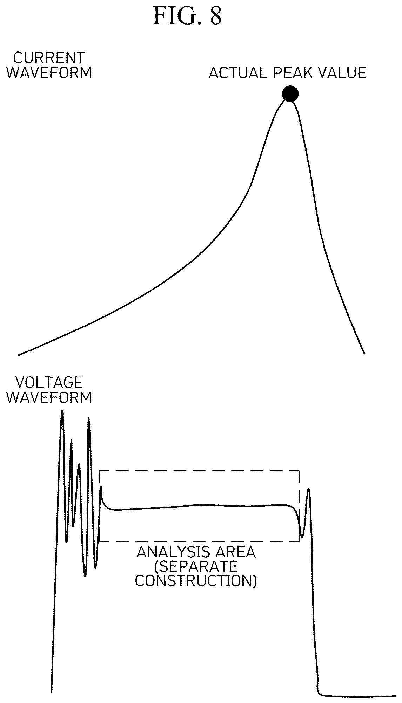

FIGS. 8 to 10 illustrate improvements according to embodiments of the present disclosure.

Referring to FIG. 8, it is assumed that the magnification of a welding current is 0.96 to 1.05, an offset is 100 ampere, the magnification of a transformer voltage is 0.87, and the magnification of a welding voltage is 0.98. An actual peak value may be analyzed in a current waveform. It is possible to separately construct an analysis area for a voltage waveform. It is possible to secure consistency because a synchronization process for a corrected value and ROI is deleted and to secure the reliability of monitoring values.

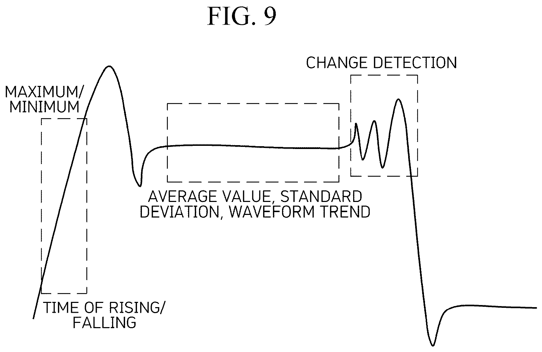

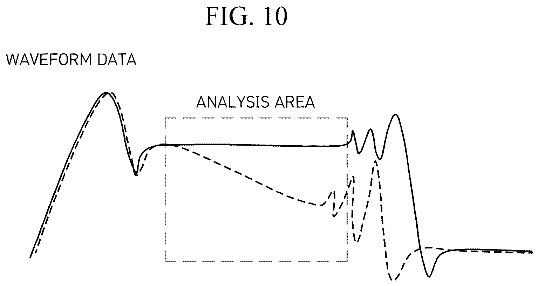

Referring to FIGS. 9 and 10, there are effects in that a maximum, a minimum, a rising time, a falling time, an average value, a standard deviation, and a waveform trend can be analyzed through an analysis area design and a change can be easily detected.

According to embodiments of the present disclosure, bidirectional communication between facility control systems such as a welder and PLC, the welder and the system for monitoring resistance welding, and the facility control system and the system for monitoring resistance welding are possible. It is possible to present a new criterion for determination using a maximum current value, a current change trend, a current rising time, a current falling time, a voltage waveform trend, a voltage waveform variation, a current standard deviation, a voltage average value, and a current average value, simply not a criterion for determination that is depends on a maximum current value.

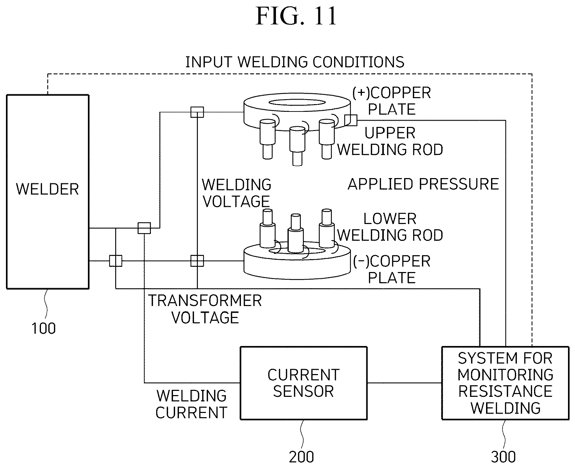

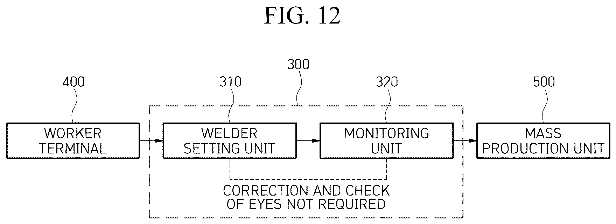

FIGS. 11 and 12 illustrate examples in which the system for monitoring resistance welding according to embodiments of the present disclosure has been applied.

A system 300 for monitoring resistance welding may input welding conditions according to the system on a welder 100.

A welding voltage, a transformer voltage, and applied pressure may be monitored by the system 300 for monitoring resistance welding. The welding current may be obtained through a current sensor 200, and corresponding data may be transmitted to the system 300 for monitoring resistance welding.

The system for monitoring resistance welding according to embodiments of the present disclosure may receive a command from a worker terminal 400. A welder setting unit 310 and a monitoring unit 320 may be driven by a program installed in the system 300 for monitoring resistance welding. Correction and check by the eyes of a manager are unnecessary. The results of the monitoring may be transmitted to the mass production unit 500.

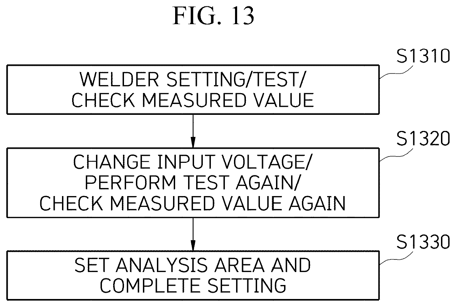

FIG. 13 illustrates a specification process of the system for monitoring resistance welding according to embodiments of the present disclosure.

A welder setting value may be checked, a welding test may be performed, and a process of checking a measured value may be performed (S1310).

An input voltage may be changed based on the results of the check of the measured value. A welding test may be performed again. A process of checking a measured value again may be performed again (S1320).

The setting of an analysis area and an analysis time may be performed according to the aforementioned process and may be completed (S1330).

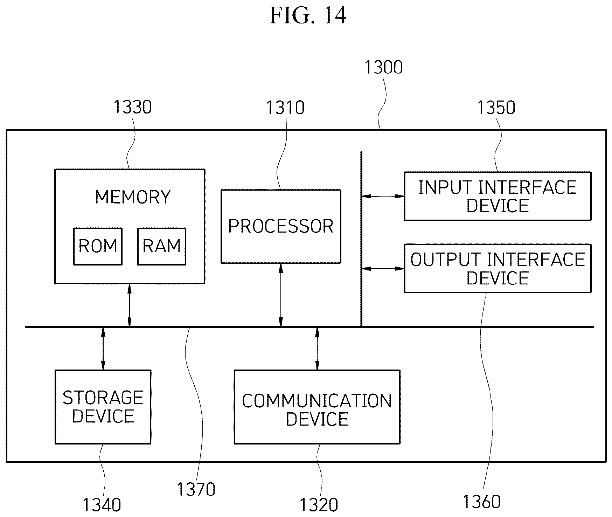

FIG. 14 is a block diagram illustrating a computer system for implementing a method according to embodiments of the present disclosure.

Referring to FIG. 14, the computer system 1300 may include at least one of a processor 1310, a memory 1330, an input interface device 1350, an output interface device 1360, and a storage device 1340 communicating with one another through a bus 1370. The computer system 1300 may also include a communication device 1320 coupled to a network. The processor 1310 may be or include a central processing unit (CPU) or a semiconductor device that executes instructions stored in the memory 1330 or in the storage device 1340. The memory 1330 and the storage device 1340 may include various types of volatile or nonvolatile storage media. For example, the memory may include a read-only memory (ROM) and a random access memory (RAM). In example embodiments of the present disclosure, the memory may be located inside or outside the processor, and may be connected to the processor through various known means. The memory is or includes various types of volatile or nonvolatile storage media, and for example, may include a read-only memory (ROM) or a random access memory (RAM).

Accordingly, example embodiments of the present disclosure may be implemented as a method implemented in a computer or a non-transitory computer-readable medium storing computer-executable instructions. In embodiments, when executed by the processor, computer-readable instructions may perform a method according to at least one aspect of the present disclosure.

The communication device 1320 may transmit or receive wired signals or wireless signals.

Additionally, the method according to embodiments of the present disclosure may be implemented in the form of program instructions that can be executed through various computer means and recorded on a computer-readable medium.

The computer-readable medium may include program instructions, data files, data structures, etc., singly or in combination. The program instructions recorded on the computer-readable medium may be specially designed and configured for the example embodiments of the present disclosure, or may be known and usable by those skilled in the art of computer software. Computer-readable recording media may include a hardware device configured to store and perform program instructions. For example, the computer-readable recording media may be or include magnetic media such as hard disks, floppy disks, and magnetic tapes, optical media such as CD-ROMs and DVDs, magneto-optical media such as floptical disks, ROM, RAM, flash memory, etc. The program instructions may include not only machine language codes such as that generated by a compiler, but also high-level language codes that can be executed by a computer through an interpreter, etc.

The system for monitoring resistance welding according to embodiments of the present disclosure may include an input interface device 1350 that receives welding condition setting information and a measured value, memory 1330 in which a program that monitors resistance welding has been stored, and a processor 1310 that executes the program. The processor 1310 may receive a measured value, that is, the results of the execution of test welding based on welding condition setting information, and may perform analysis setting.

The input interface device 1350 may receive a digital signal at a rate exceeding a predetermined number per second. The processor 1310 may represent a digital signal by converting the digital signal into quantitative data numerically and visually.

The processor 1310 may perform the analysis of waveform characteristics by omitting the correction of conversion data and a synchronization process for the analysis of an analog signal.

The processor 1310 may measure the waveform data of a welder based on a preset sampling rate, and may perform analysis on the measured waveform data of the welder.

The processor 1310 may perform analysis setting on the waveform characteristics including an analysis area and an analysis time.

The processor 1310 may extract waveform characteristics including at least any one of a maximum, a minimum, an average value, a standard deviation, and a waveform trend.

Hereinafter, any material that may be usable for the secondary battery according to examples of the present disclosure will be described.

As the positive electrode active material, a compound capable of reversibly intercalating/deintercalating lithium (e.g., a lithiated intercalation compound) may be used. For example, at least one of a composite oxide of lithium and a metal such as at least one of cobalt, manganese, nickel, and combinations thereof may be used.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by at least any one of the following formulas may be used: LiₐA_{1-b}X_{b}O_{2-c}D_{c} (0. 90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{d}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{d}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is or includes at least Ni, Co, Mn, or a combination thereof; X is or includes at least Al, Ni, Co, Mn, Cr, Fe, Mg, Sr, V, a rare earth element, or a combination thereof; D is or includes at least O, F, S, P, or a combination thereof; G is or includes at least Al, Cr, Mn, Fe, Mg, La, Ce, Sr, V, or a combination thereof; and L1 is or includes at least Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be or include aluminum (Al) but is not limited thereto.

The negative electrode active material may include a material capable of reversibly intercalating/deintercalating at least one of lithium ions, lithium metal, an alloy of lithium metal, a material capable of being doped and undoped with lithium, or a transition metal oxide.

The material capable of reversibly intercalating/deintercalating lithium ions may be or include a carbon-based negative electrode active material, which may include, for example, at least crystalline carbon, amorphous carbon, or a combination thereof. Examples of the crystalline carbon may include graphite, such as natural graphite or artificial graphite, and examples of the amorphous carbon may include at least one of soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be or include at least silicon, a silicon-carbon composite, SiOx (0 < x < 2), a Si-based alloy, or a combination thereof.

The silicon-carbon composite may be or include a composite of silicon and amorphous carbon. According to one example embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, at least one of copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent may constitute a medium through which ions involved in the electrochemical reaction of the battery can move.

The non-aqueous organic solvent may be or include at least a carbonate-based, an ester-based, an ether-based, a ketone-based, an alcohol-based solvent, an aprotic solvent, and may be used alone or in combination of two or more.

Depending on the type of lithium secondary battery, a separator may be present between the first electrode plate (e.g., the negative electrode) and the second electrode plate (e.g., the positive electrode). As the separator, at least polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles such as at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

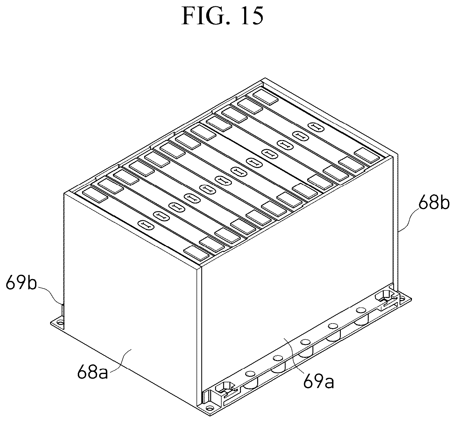

FIG. 15 is an illustration of a secondary battery module in which secondary batteries manufactured according to examples of the present disclosure are arranged. With the increase in secondary battery capacity for driving electric vehicles, and the like, a secondary battery module may be manufactured by arranging and connecting a plurality of secondary battery cells transversely and/or longitudinally. The plurality of secondary batteries may be arranged in a space defined by a pair of facing end plates 68a and 68b and a pair of facing side plates 69a and 69b. The secondary batteries may be designed appropriately in arrangement (direction) and number to obtain desired voltage and current specifications.

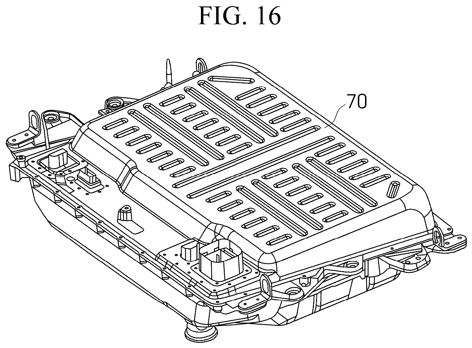

FIG. 16 is an illustration schematically showing the configuration of a battery pack 70 according to example embodiments of the present disclosure. Referring to FIG. 16, a battery pack 70 may include an assembly to which individual batteries are electrically connected, and a pack housing accommodating the same. In the drawings, for convenience of illustration, components including a bus bar, a cooling unit, external terminals for electrically connecting batteries, etc., are not shown.

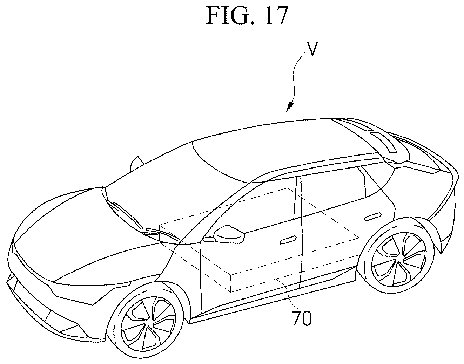

The battery pack 70 may be mounted on (or in) a vehicle. The vehicle may be, for example, an electric vehicle, a hybrid vehicle, a plug-in hybrid vehicle, and the like. The vehicle may be a four-wheeled vehicle or a two-wheeled vehicle but is not limited thereto. FIG. 17 shows a vehicle V which includes the battery pack 70 shown in FIG. 16 on the lower body thereof. The vehicle V may operate by (e.g., may be powered by) receiving power from the battery pack 70.

Although the present disclosure has been described herein with respect to example embodiments thereof, the present disclosure is not limited thereto. Various modifications and variations can be made thereto by those skilled in the art within the spirit of the present disclosure and the equivalent scope of the appended claims.

## Claims

1. A method of monitoring resistance welding, which is performed by a system (300) for monitoring resistance welding, the method comprising steps of:
a) converting a signal obtained in a resistance welding process;
b) measuring waveform data of a welder (100);
c) performing analysis setting and automatic waveform data analysis;
d) extracting a feature value for each waveform based on results of the waveform data analysis;
e) setting specifications by performing data communication with the welder (100); and
f) performing a reinforcement of the specifications based on the waveform data analysis.

2. The method as claimed in claim 1, wherein the step a) comprises removing sensor noise in a process of converting into a digital signal an obtained analog signal.

3. The method as claimed in claim 1 or 2, wherein the step b) comprises measuring the waveform data of the welder (100) based on a preset sampling rate.

4. The method as claimed in any one of claims 1 to 3, wherein the step c) comprises performing the analysis setting comprising an analysis area and an analysis time.

5. The method as claimed in any one of claims 1 to 4, wherein the step d) comprises extracting the feature value for each waveform comprising at least any one of a maximum, a minimum, an average value, a standard deviation, and a waveform trend as consecutive analysis results of the waveform data of the welder (100).

6. The method as claimed in any one of claims 1 to 5, wherein the step e) comprises setting the specifications related to reinforcement of a monitoring system by performing bidirectional communication with the welder with which bidirectional communication with a facility control system is performed.

7. The method as claimed in any one of claims 1 to 6, wherein the step f) comprises designing an additional function module that is matched with user needs based on results of the reinforcement of the specifications based on the waveform data analysis.

8. A system (300, 1300) for monitoring resistance welding, comprising:
an input interface device (1350) configured to receive welding condition setting information and a measured value;
memory (1330) in which a program that performs monitoring of resistance welding has been stored; and
a processor (1310) configured to execute the program,
wherein the processor (1310) receives the measured value which includes results of an execution of test welding based on the welding condition setting information and performing analysis setting.

9. The system (300, 1300) as claimed in claim 8, wherein:
the input interface device (1350) receives a digital signal at a rate exceeding a predetermined number per second, and
the processor (1310) represents a digital signal numerically and visually by converting the digital signal into quantitative data.

10. The system (300, 1300) as claimed in claim 8 or 9, wherein the processor (1310) performs an analysis of waveform characteristics by omitting correction of conversion data and a synchronization process for an analysis of an analog signal.

11. The system (300, 1300) as claimed in claim 10, wherein the processor (1310) measures waveform data of a welder (100) based on a preset sampling rate and performs an analysis of the waveform data.

12. The system (300, 1300) as claimed in claim 10 or 11, wherein the processor (1310) performs analysis setting on the waveform characteristics comprising an analysis area and an analysis time.

13. The system (300, 1300) as claimed in any one of claims 10 to 12, wherein the processor (1310) extracts the waveform characteristics comprising at least any one of a maximum, a minimum, an average value, a standard deviation, and a waveform trend.
